# EUROPEAN PATENT SPECIFICATION

(11) **EP 0 491 885 B1**
(45) Date of publication and mention of the grant of the patent: **13.11.1996**
(21) Application number: 91909726.1
(22) Date of filing: 06.05.1991
(51) Int. Cl.: G21C 19/07, G21C 19/40

(54) **MAGAZINE FOR FUEL ASSEMBLIES WITH SPENT NUCLEAR FUEL**
BRENNELEMENTLAGERGESTELL FÜR VERBRAUCHTEN KERNBRENNSTOFF
CONTENEUR DE STOCKAGE D'ELEMENTS COMBUSTIBLES NUCLEAIRES EPUISES

(30) Priority: 09.05.1990 SE 9001687
(43) Date of publication of application: 01.07.1992
(73) Proprietor: ABB ATOM AB, S-721 83 Västeras (SE)
(72) Inventor: ERICSSON, Stig, S-724 76 Västeras (SE); SUVANTO, Antti, S-723 48 Västeras (SE)
(74) Representative: Boecker, Joachim, Dr.-Ing.
(86) International application number: SE9100319
(87) International publication number: WO9117547

(56) References cited:
- EP-A- 0 080 894
- EP-A- 0 220 931
- EP-A- 0 343 410
- DE-C- 2 835 392
- SE-B- 0 429 273
- SE-B- 0 445 501

## Description

### TECHNICAL FIELD

The invention relates to a magazine for storage of spent nuclear fuel in the fuel pools or intermediate storages of a power plant, awaiting final utilization by possible reprocessing or ultimate waste disposal in, for example, rock depositories, when the reactivity has dropped to a level which facilitates the handling, reprocessing and ultimate waste disposal. The packing degree is determined by the centre distance of the assemblies, the quantity of absorption material in assembly-separating walls and the necessary play between a fuel assembly and the channel walls, taking into consideration deformations of the assemblies.

### BACKGROUND ART

During use in a fuel core, the usually square tubular casing of the fuel assembly is influenced by the neutron irradiation and by a pressure difference between the inner and outer sides of the fuel assembly casing. Both of these factors result in deformation of the walls of the casing during use of the assemblies in the core. The casing may be curved in the longitudinal direction. The walls may bulge outwards. This means that channels in magazines for storage of spent fuel assemblies have been dimensioned while taking these deformations into consideration. This has meant that it has been necessary to design prior art magazines in view of the greatest deformations that arise in a minority of the assemblies. Thus, a limited number of greatly deformed assemblies have determined the dimensions of the channels and hence the size of the magazines. This also influences the volume requirement in expensive intermediate storages for spent nuclear fuel.

The object of the invention is to reduce the channel cross section of the magazine and increase the packing density without risking that deformed fuel assemblies are inserted into the channels or get stuck in the channels. The invention permits an increased packing degree and a reduced volume requirement in an intermediate storage.

### SUMMARY OF THE INVENTION

According to the invention, the magazine is designed with a rectangular, preferably square casing and a lattice of plates containing absorber material. The casing may consist of stainless steel sheet and the lattice of boron-alloyed steel. The lattice is made of plates, arranged crosswise, with longitudinal slits along the greater part of its length. The plates are fitted into one another and joined together at their end portions into a fixed lattice. The slits permit a certain resilience in the walls formed of the intermediate portions, the walls thus adapting to deformed portions of fuel assemblies.

To reduce the risk of gaps arising upon deformation of the channel walls in the magazines, which may entail an unacceptable risk of reactivity increase, the lattice plates in those planes which are perpendicular to each other are formed with gaps of different sizes. In one group of lattice plates, the gaps are formed with a width exceeding the thickness of the material and in the other group of lattice plates the gaps are formed with a width which is smaller than the thickness of the material. When using lattice-forming plates with a thickness of 3-4 mm, the gap may, for example, be 10 mm and 0.5 mm.

### BRIEF DESCRIPTION OF THE DRAWINGS

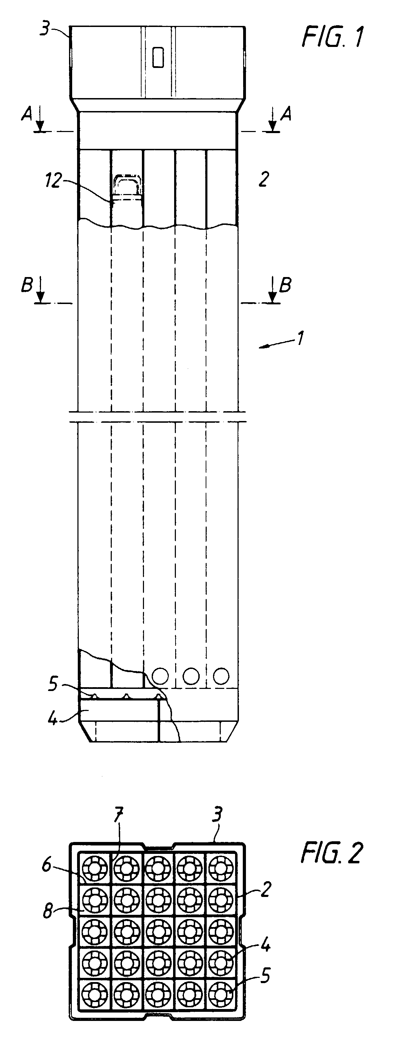

Figure 1 shows a side view of a magazine,
Figure 2 shows a top view of a magazine,

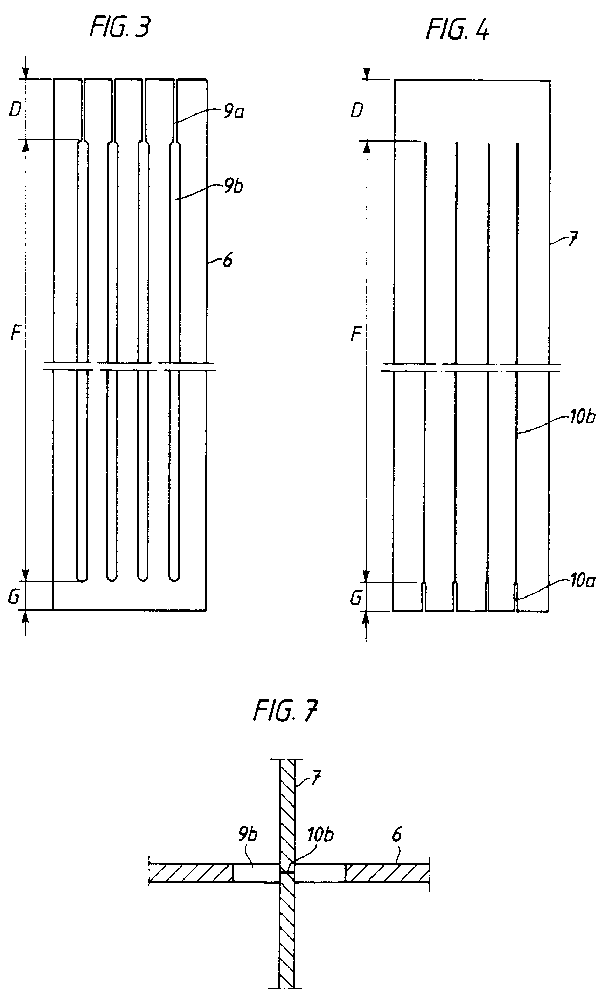

Figures 3 and 4 show plates forming a lattice and channels for fuel assemblies,
Figure 5 shows a perspective view of a top portion of the lattice according to A-A in Figure 1,
Figure 6 shows a perspective section of an intermediate portion of the lattice according to B-B in Figure 1, and
Figure 7 shows a sectional view of two intersecting plates 6 and 7.

### DESCRIPTION OF THE PREFERRED EMBODIMENT

In the figures, 1 designates the whole magazine, 2 its tubular casing, 3 its top portion with means for connection with lifting equipment, and 4 a bottom portion, with a supporting grate 5 for fuel assemblies 12. Intersecting plates 6, 7 form a lattice and channels 8, which are each intended to occupy one fuel assembly.

In the individual plates of type 6, slits 9a and 9b cut. Along the distance D the slits 9a have a width corresponding to the thickness of the plate 7. Along the distance F in the central part of the plate 6, the slits 9b have a width which is greater than the thickness of the plate, suitably greater than twice the thickness of the plate. Along the distance G there are no slits.

In the individual plates of type 7, slits 10a and 10b are cut. Along the distance G the slits 10a have a width corresponding to the thickness of the plate 6. Along the distance F the slits 10b have a width which is smaller than the thickness of the material, suitably less than half the thickness. Along the distance D there are no slits.

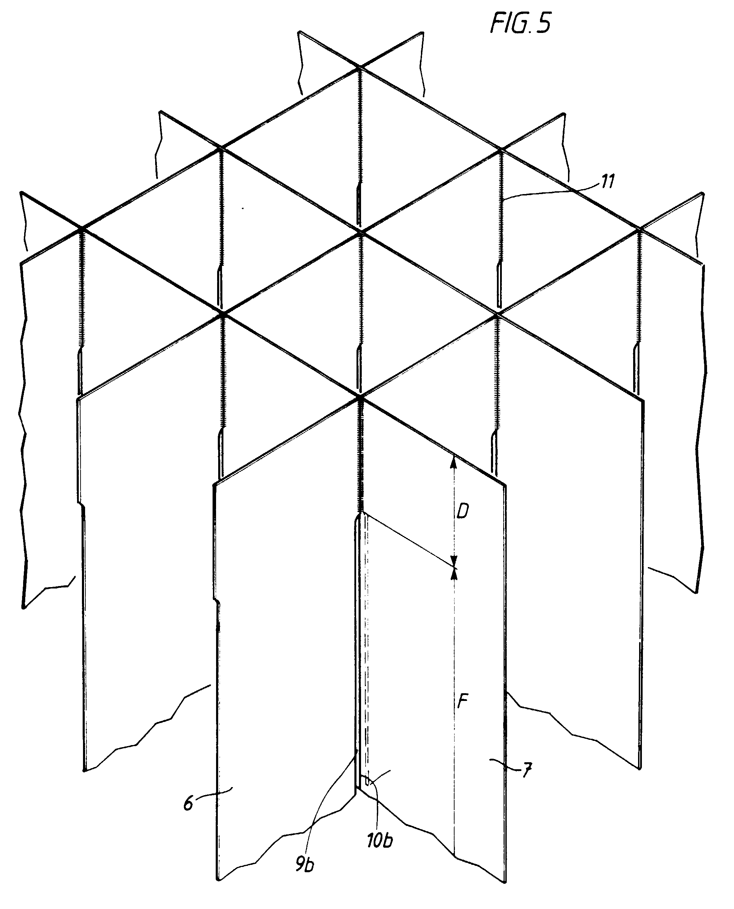

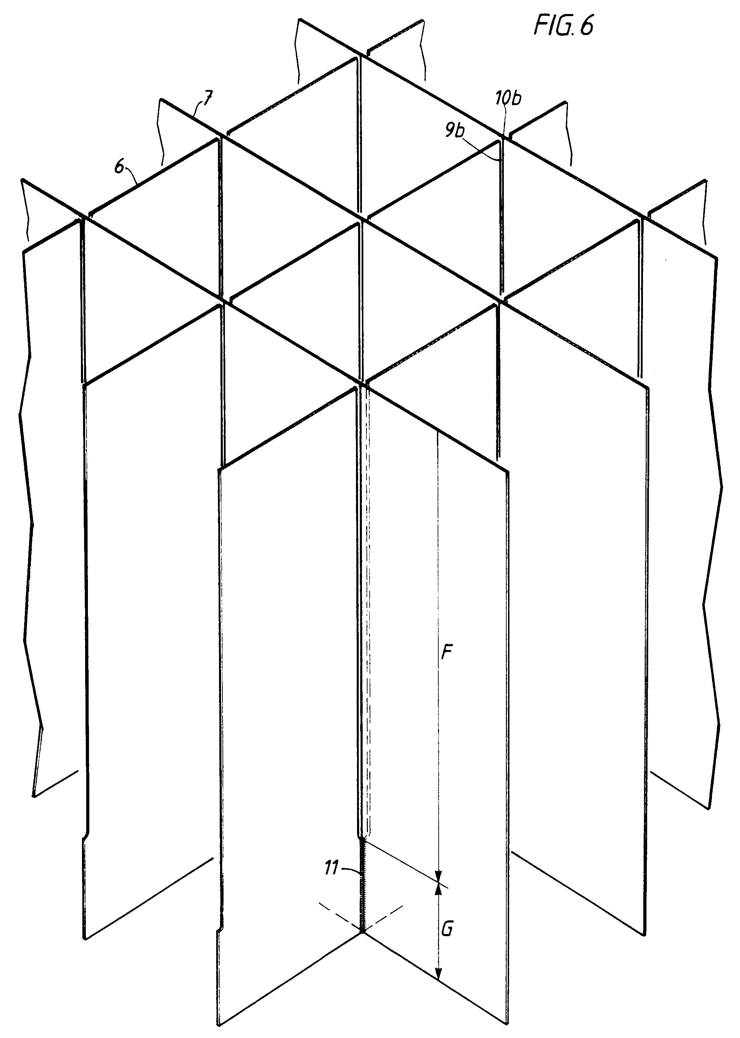

The plates 6 and 7 are joined together by welds 11 to form a lattice and, as shown in Figures 5 and 6, are joined by welding along the distances D and G, are placed in the casing 2, and are connected to the casing 2 at their upper and lower parts along the distances D and G. On central portions F there is a certain resilience in the walls of the channels 8 perpendicular to the plane of the walls. This resilience makes it possible to work with channels with a considerably smaller cross section than in hitherto used magazines. Despite the smaller cross section, fuel assemblies with a considerable amount of curving or bulging may be mounted in the magazine without any major problems. By the resilience of the channel walls, the frictional resistance is limited when the assemblies make contact with channel walls.

## Claims

1. A magazine (1) for storage of fuel assemblies (12) with spent nuclear fuel in intermediate storages up to reprocessing or ultimate waste disposal, which magazine (1) comprises a tubular casing (2) with a number of channels (8) for fuel assemblies (12), in which channels (8) the walls contain neutron-absorbing material, **characterized** in that the channels (8) are formed between intersecting plates (6, 7) which at their ends are joined to one another and to the casing of the magazine and at their central portions (F) are provided with slits (9b, 10b) extending in the longitudinal direction of the magazine to permit resilience perpendicular to the plane of the plates (6, 7).

2. A magazine (1) according to claim 1, **characterized** in that the channels are formed by plates alloyed with boron as neutron absorber.

3. A magazine (1) according to claim 1 or 2, **characterized** in that the slits (9b) in plates (6) with a first orientation direction have a width greater than the thickness of the plates (6) and that the slits (10b) in plates (7) in a second intersecting orientation direction have a width smaller than the thickness of the plates (7).

4. A magazine according to claim 3, **characterized** in that the width of the slits (9b, 10b) is, respectively, at least twice as large and at most half as large as the thickness of the plates (6, 7).

## Patentansprüche

1. Magazin (1) zur Lagerung von Brennelementen (12) mit verbrauchtem Kernbrennstoff in Zwischenlagern bis zur Wiederaufbereitung oder Endlagerung, zu welchem Magazin (1) ein rohrförmiges Gehäuse (2) mit einer Anzahl von Kanälen (8) für Brennelemente (12) gehört, in welchen Kanälen (8) die Wände neutronenabsorbierendes Material enthalten, **dadurch gekennzeichnet,** daß die Kanäle (8) von sich kreuzenden Platten (6, 7) gebildet werden, die an ihren Enden miteinander und mit dem Gehäuse des Magazins verbunden sind und die in ihren mittleren Abschnitten (F) mit Schlitzen (9b, 10b) versehen sind, die sich in Längsrichtung des Magazins erstrecken, um eine Nachgiebigkeit senkrecht zu der Ebene der Platten (6, 7) zu ermöglichen.

2. Magazin (1) nach Anspruch 1, **dadurch gekennzeichnet,** daß die Kanäle von Platten gebildet werden, die mit Bor als Neutronenabsorber legiert sind.

3. Magazin (1) nach Anspruch 1 oder 2, **dadurch gekennzeichnet,** daß die Schlitze (9b) in Platten (6) mit einer ersten Orientierungsrichtung eine Breite haben, die größer als die Dicke der Platten (6) sind, und daß die Schlitze (10b) der Platten (7) in einer zweiten kreuzenden Orientierungsrichtung eine Breite haben, die kleiner ist als die Dicke der Platten (7).

4. Magazin (1) nach Anspruch 3, **dadurch gekennzeichnet,** daß die Breite der Schlitze (9b, 10b) mindestens doppelt so groß beziehungsweise höchstens halb so groß ist wie die Dicke der Platten (6, 7).

## Revendications

1. Magasin (1) de stockage d'assemblages combustibles (12) ayant du combustible nucléaire épuisé dans des stockages intermédiaires jusqu'au retraitement ou à l'élimination définitive des déchets, ce magasin (1) comprenant un corps (2) tubulaire ayant un certain nombre de canaux (8) pour des assemblages combustibles (12), canaux (8) dont les parois contiennent de la manière absorbant les neutrons, caractérisé en ce que les canaux (8) sont formés entre des plaques (6, 7) entrecroisées qui à leurs extrémités sont réunies l'une à l'autre et au corps du magasin et à leurs parties (F) centrales sont munies de fentes (9b, 10b) s'étendant dans la direction longitudinale du magasin pour donner de la rigidité perpendiculairement au plan des plaques (6, 7).

2. Magasin (1) suivant la revendication 1, caractérisé en ce que les canaux sont formés de plaques alliées à du bore comme agent absorbant les neutrons.

3. Magasin (1) suivant la revendication 1 ou 2, caractérisé en ce que les fentes (9b) ménagées dans les plaques (6) ayant une première direction d'orientation ont une largeur plus grande que l'épaisseur des plaques (6) et les fentes (10b) ménagées dans les plaques (7) dans une seconde direction d'orientation en intersection ont une épaisseur plus petite que l'épaisseur des plaques (7).

4. Magasin suivant la revendication 3, caractérisé en ce que la largeur des fentes (9b, 10b) est respectivement au moins deux fois aussi grande et au plus égale à la moitié de l'épaisseur des plaques (6, 7).
